# FASCICULE DE BREVET EUROPEEN

(11) **EP 2 250 426 B1**
(45) Date de publication et mention de la délivrance du brevet: **28.09.2011**
(21) Numéro de dépôt: 09722823.3
(22) Date de dépôt: 20.02.2009
(51) Int. Cl.: F17C 13/04

(54) **DISPOSITIF DE REMPLISSAGE ET DE DISTRIBUTION DE GAZ ET PROCEDE DE REMPLISSAGE**
GASABFÜLL- UND AUSGABEVORRICHTUNG SOWIE ABFÜLLVERFAHREN
GAS FILLING AND DISPENSING DEVICE, AND FILLING METHOD

(30) Priorité: 21.02.2008 FR 0851105
(43) Date de publication de la demande: 17.11.2010
(73) Titulaire: L'Air Liquide Société Anonyme pour l'Etude et l'Exploitation des Procédés Georges Claude, 75007 Paris (FR)
(72) Inventeur: MORETTI, Alessandro, I-25127 Brescia (IT); PISOT, Philippe, F-95290 L'Isle Adam (FR); DUPONT, Maxime, F-38000 Grenoble (FR)
(74) Mandataire: De Cuenca, Emmanuel Jaime
(86) Numéro de dépôt international: PCT/FR2009/000188
(87) Numéro de publication internationale: WO 2009/115688

(56) Documents cités:
- EP-A- 0 401 072
- EP-A- 1 316 755
- EP-A- 1 855 048
- DE-A1- 4 334 182
- US-A1- 2004 000 338
- US-B1- 6 257 000

## Description

La présente invention concerne un dispositif de remplissage et de distribution de gaz ainsi qu'un procédé de remplissage.

L'invention concerne plus particulièrement un dispositif de remplissage et de distribution de gaz comprenant un corps destiné à être disposé dans l'orifice d'un réservoir de stockage de gaz sous pression, un circuit de soutirage de gaz s'étendant entre une première extrémité amont destinée à être reliée à l'intérieur du réservoir et une seconde extrémité aval destinée à être reliée à un utilisateur du gaz, un conduit de remplissage ayant une première extrémité amont destinée à être reliée à l'intérieur du réservoir et une seconde extrémité aval destinée à être reliée à un organe de remplissage, le conduit de remplissage comprenant au moins une portion distincte du circuit de soutirage, ledit conduit de remplissage comprenant un premier clapet.

Le document EP 1 855 048 divulgue un dispositif de remplissage et de distribution de gaz.

Pour assurer le remplissage de bouteilles de gaz à haute pression (notamment dans des applications de carburant gazeux de type hydrogène), on peut utiliser des systèmes de connexions rapides pour raccorder une prise de remplissage (qui délivre le gaz sous pression à la bouteille) au port de remplissage d'un robinet (ou analogue) monté dans l'orifice de la bouteille. Pour cela, en début d'opération, la prise de remplissage est d'abord raccordée avant d'être mise sous pression (c'est-à-dire qu'elle ne délivre pas de gaz avant sa connexion au port de remplissage).

Le clapet de remplissage est de préférence (sans que ce soit limitatif) un clapet anti-retour à fermeture automatique est qui s'ouvre sous l'action du gaz délivré par la prise de remplissage.

En cas de défaillance du clapet de remplissage ou en cas d'étanchéité imparfaite de celui-ci, il y a risque de montée en pression dans la chambre de connexion du port de remplissage.

Cette pression anormalement élevée peut endommager le port de remplissage, la prise de remplissage qui s'y connecte (extrusion des joints et perte d'étanchéité) et également la prise de soutirage lorsque les soutirages et remplissages sont réalisés via un port commun (connexion unique).

Pour résoudre ce problème, on utilise des clapets de sécurité (PRD).

Cependant, dans certaines applications (gaz dangereux ou inflammables notamment), ces clapets de sécurité risquent de libérer à l'atmosphère des quantités de gaz dangereux (nuages ou flammes incontrôlées).

Une autre solution consiste à découpler totalement les circuits de remplissage et de soutirage pour éviter que la haute pression de gaz du circuit de remplissage défectueux ne vienne dans le circuit de soutirage. Ceci ne résout pas totalement le problème des risques de montée en pression au niveau du port de remplissage et fait perdre la possibilité d'avoir des ports de remplissage et de soutirage communs et confondus.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le conduit de remplissage comprend un second clapet d'isolement disposé en série avec le premier clapet.

Par ailleurs, des modes de réalisation de l'invention peuvent comporter l'une ou plusieurs des caractéristiques suivantes :
- le premier clapet est un clapet anti-retour à fermeture automatique,
- le second clapet d'isolement est disposé en aval du premier clapet,
- le second clapet d'isolement comprend un organe de manoeuvre actionnable manuellement pour commander l'ouverture et la fermeture dudit second clapet,
- le second clapet d'isolement comprend un siège et un obturateur mobile apte à coopérer en fermeture ou en ouverture avec le siège pour respectivement interrompre ou permettre l'écoulement d'un gaz dans le conduit de remplissage, l'organe de manoeuvre actionnable manuellement comprenant une pièce solidaire de l'obturateur mobile et déplaçable relativement au corps du dispositif, par exemple par vissage/dévissage,
- l'obturateur est mobile en translation et en ce que le conduit de remplissage est relié au second clapet d'isolement via un canal et une chambre, ledit canal étant de préférence sensiblement transversal à la direction de translation de l'obturateur mobile,
- le premier clapet comprend un obturateur mobile sollicité par un organe de rappel vers l'aval en direction d'un siège en vue de la fermeture automatique du conduit de remplissage, ledit premier clapet et l'organe de rappel étant agencés et dimensionnés pour autoriser l'ouverture dudit premier clapet sous l'action d'un flux de gaz de remplissage ayant une pression supérieure à un seuil déterminé,
- le circuit de soutirage et le conduit de remplissage ont des extrémités amont communes ou distinctes et des extrémités aval communes ou distinctes,
- le circuit de soutirage comprend au moins un clapet d'isolation et un détendeur de pression,
- la section de passage de gaz au niveau du second clapet d'isolement est supérieure à la section de passage de gaz au niveau du premier clapet anti-retour.

Un autre but est de proposer un procédé de remplissage d'un réservoir de gaz sous pression pourvu d'un dispositif de remplissage et de distribution selon l'une quelconque des caractéristiques précédentes ou ci-après.

Selon une particularité avantageuse le procédé de remplissage comporte une étape d'ouverture du second clapet d'isolement, une étape d'ouverture du premier clapet anti-retour par délivrance de gaz et, en fin de remplissage, une étape de fermeture automatique du premier clapet anti-retour par arrêt de la délivrance de gaz, puis une étape de fermeture du second clapet d'isolement.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant la structure et le fonctionnement d'un exemple possible de réalisation d'un dispositif de remplissage et de distribution selon l'invention,
- la figure 2 représente une vue schématique, partielle et en coupe, illustrant la structure et le fonctionnement d'un exemple possible de mécanisme de clapets de remplissage d'un dispositif de remplissage et de distribution selon l'invention.

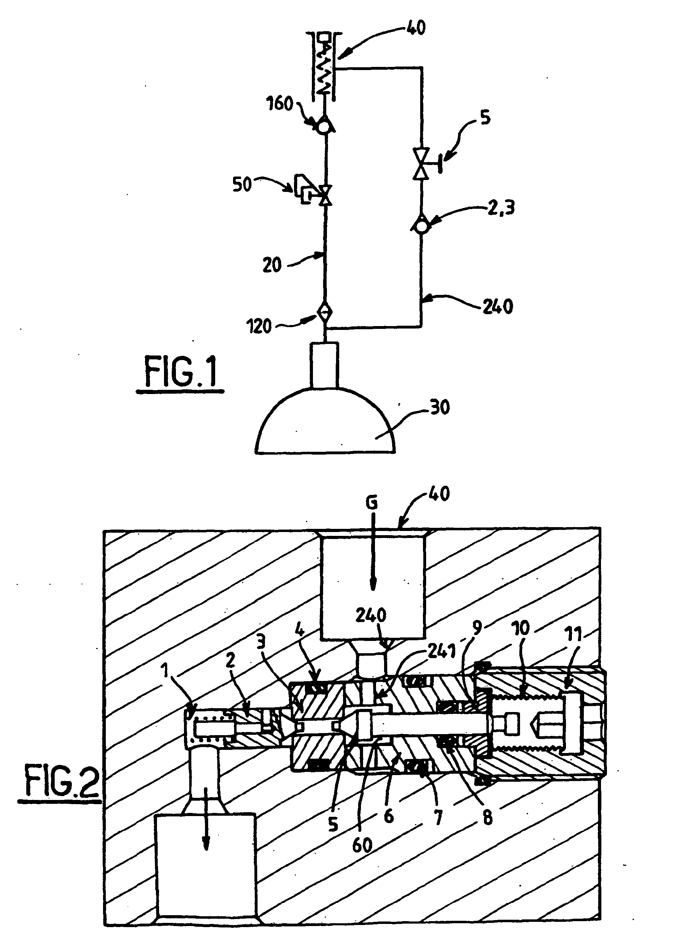

La figure 1 illustre un exemple de réalisation non limitatif d'architecture à laquelle peut s'appliquer l'invention.

Le corps du dispositif de remplissage et de distribution de gaz est disposé dans l'orifice d'un réservoir 30 de stockage de gaz sous pression et comprend un circuit 20 de soutirage de gaz s'étendant entre une première extrémité amont reliée à l'intérieur du réservoir 30 et une seconde extrémité aval destinée à être reliée à un utilisateur 40 du gaz.

Par exemple, le circuit 20 de soutirage comprend, disposés en série d'amont en aval, un filtre 120, un détendeur 50 de pression, un premier clapet 160 d'isolation et éventuellement un second clapet de fermeture (connexion 40).

Le dispositif comprend également un conduit 240 de remplissage ayant une première extrémité amont reliée à l'intérieur du réservoir 30 et une seconde extrémité aval destinée à être reliée à un organe de remplissage. De préférence, et comme représenté, les extrémités aval du conduit 240 de remplissage et du circuit 20 de soutirage sont communes (pour permettre le remplissage et le soutirage via une connexion 40 unique). Bien entendu, l'invention peut s'appliquer à toute autre architecture (extrémités amont/aval distinctes et/ou portions de circuit communes pour le remplissage et le soutirage).

Le conduit 240 de remplissage comprend un premier clapet 2, 3 anti-retour en série avec un second clapet 5, 10 d'isolement.

Sans que ce soit nécessaire, le second clapet 5, 10 d'isolement est de préférence commandé manuellement.

Ce second clapet 5 d'isolement assure une étanchéité et une sécurité accrue. Le second clapet 5 est de préférence ouvert avant la délivrance du gaz de remplissage et est fermé après la fin du remplissage (après l'arrêt de la délivrance du gaz).

La figure 2 illustre un agencement possible des clapets du conduit 240 de remplissage.

Le gaz G sous pression arrive de la prise de remplissage et passe dans les orifices radiaux 241 d'une pièce support 6 vers une chambre 60 interne. La pièce support 6 est par exemple cylindrique et montée de façon étanche (joint 7 et bague-anti-extrusion) dans le corps du dispositif. La pièce support 6 comprend un alésage longitudinal dans lequel est montée coulissante la tige d'un obturateur formant le second clapet 5. L'extrémité amont de l'obturateur ou second clapet 5 (par exemple en forme de pointeau) est logée dans la chambre 60 interne. L'autre extrémité de l'obturateur 5 coulissant est solidaire d'un écrou 10 dont la surface extérieure est filetée et coopère avec un taraudage interne d'un porte écrou 11. Comme représenté, le porte-écrou 11 peut être lui-même vissé dans le corps du dispositif. L'étanchéité entre l'obturateur du second clapet 5 mobile et la pièce support 6 peut être assurée par un système de joint 8 et bague anti-extrusion (autour de l'obturateur 5) ainsi qu'une entretoise épaulée 9.

Dans cet exemple, le siège du second clapet 5 est formé par l'entrée d'un canal central d'un siège 3 fixe (par exemple cylindrique) monté étanche (joint 4) dans le corps du dispositif. En amont du siège 3 du second clapet 5, le corps du dispositif abrite un premier clapet du type « clapet anti-retour » comprenant un système de ressort 1 sollicitant un obturateur 2 (ou pointeau) vers la fermeture de l'extrémité amont du canal central du siège 3 du second clapet 5.

C'est-à-dire que l'organe 3 peut avantageusement former à la fois le siège des premier 2 et second 5 obturateurs de clapets. En aval du premier clapet 2, le gaz communique avec l'intérieur du réservoir 30.

Pour réaliser un remplissage, l'utilisateur peut d'abord connecter la prise de remplissage puis ouvrir le second clapet 5 en actionnant manuellement l'écrou 10.

Lorsque le second clapet 5 est ouvert, l'utilisateur peut commander la délivrance du gaz par la prise de remplissage. Le gaz sous pression traverse alors le canal central du siège 3 qui est ouvert. Le gaz à une pression suffisante repousse ensuite l'obturateur du premier clapet 2 hors de son siège contre l'action du ressort 1 et arrive ensuite dans le réservoir.

Lorsque le remplissage est terminé et que le conduit de remplissage est mis à l'atmosphère, le ressort 1 du premier clapet 2 reprend le dessus et referme automatiquement le premier clapet 2 contre le siège 3.

L'utilisateur peut introduire un outil dédié dans le porte-écrou 11 compatible avec l'empreinte de l'écrou 10 pour manoeuvrer ce dernier en vue du déplacement de l'obturateur du second clapet 5 en position de fermeture contre le siège 3. Ceci réalise une double étanchéité.

L'étanchéité du second clapet 5 est plus efficace et plus sûre du fait de son actionnement mécanique via un écrou (ou analogue) que l'étanchéité du premier clapet 2. En effet, le premier clapet 2 peut être influencé par des effet dynamiques extérieurs, par exemple des vibrations (l'ouverture du premier clapet 2 est le résultat de l'équilibre dynamique entre la force du ressort 1 est la force antagoniste du gaz de remplissage).

De plus, et de préférence, lorsque le second clapet 5 est en position ouverte, sa section de passage pour le gaz est supérieure à la section de passage créée par le premier clapet 2 en position ouverte.

Avantageusement, l'étanchéité entre la surface du siège 3 et du second clapet 5 est ainsi moins soumise au flux de gaz à haute pression que ne le sont le premier clapet 2 et son siège 3.

Bien entendu, le(s) siège(s) 3 peut avoir toute autre forme (par exemple une forme non symétrique, contrairement à l'exemple représenté à la figure 2).

De même, le premier clapet peut avoir une structure et un fonctionnement différent des clapets de type « anti-retour ».

## Revendications

1. Dispositif de remplissage et de distribution de gaz comprenant un corps destiné à être disposé dans l'orifice d'un réservoir (30) de stockage de gaz sous pression, un circuit (20) de soutirage de gaz s'étendant entre une première extrémité amont destinée à être reliée à l'intérieur du réservoir (30) et une seconde extrémité aval destinée à être reliée à un utilisateur du gaz, un conduit (240) de remplissage ayant une première extrémité amont destinée à être reliée à l'intérieur du réservoir (30) et une seconde extrémité aval destinée à être reliée à un organe de remplissage, ledit conduit (240) de remplissage comprenant au moins une portion distincte du circuit (20) de soutirage, le conduit (240) de remplissage comprenant un premier clapet (2, 3), le conduit (240) de remplissage comprend un second clapet (5) d'isolement disposé en série avec le premier clapet (2, 3), le second clapet (5) d'isolement étant disposé en aval du premier clapet (2, 3), **caractérisé en ce que** le second clapet (5, 10) d'isolement comprend un organe de manoeuvre (10) actionnable manuellement pour commander l'ouverture et la fermeture dudit second clapet (5), et **en ce que** le premier clapet (2, 3) comprend un obturateur (2) mobile sollicité par un organe (1) de rappel vers l'aval en direction d'un siège (3) en vue de la fermeture automatique du conduit (240) de remplissage, ledit premier clapet (2, 3) et l'organe (1) de rappel étant agencés et dimensionnés pour autoriser l'ouverture dudit premier clapet (2, 3) sous l'action d'un flux de gaz de remplissage ayant une pression supérieure à un seuil déterminé et **en ce que** le circuit de soutirage (20) et le conduit (240) de remplissage ont des extrémités aval communes, le conduit (240) de remplissage comprenant un troisième clapet (40) de fermeture situé en aval du second clapet (5), ledit troisième clapet (40) de fermeture étant commun aux extrémités aval du conduit (240) de remplissage et du circuit (20) de soutirage.

2. Dispositif selon la revendication 1, **caractérisé en ce que** le second clapet (5, 10) d'isolement comprend un siège (3) et un obturateur (5) mobile apte à coopérer en fermeture ou en ouverture avec le siège (3) pour respectivement interrompre ou permettre l'écoulement d'un gaz dans le conduit (240) de remplissage, l'organe de manoeuvre (10) actionnable manuellement comprenant une pièce (10) solidaire de l'obturateur (5) mobile et déplaçable relativement au corps du dispositif, par exemple par vissage/dévissage.

3. Dispositif selon la revendication 2, **caractérisé en ce que** l'obturateur (5) est mobile en translation et **en ce que** le conduit (240) de remplissage est relié au second clapet (5) d'isolement via un canal (241) et une chambre (60), ledit canal (241) étant de préférence sensiblement transversal à la direction de translation de l'obturateur (5) mobile.

4. Dispositif selon l'une quelconque des revendications 1 à 3, **caractérisé en ce que** le circuit de soutirage (20) et le conduit (240) de remplissage ont des extrémités amont communes ou distinctes et des extrémités aval communes ou distinctes.

5. Dispositif selon l'une quelconque des revendications 1 à 4, **caractérisé en ce que** le circuit (20) de soutirage comprend au moins un clapet (160) d'isolation et un détendeur (50) de pression.

6. Dispositif selon l'une quelconque des revendications 1 à 5, **caractérisé en ce que** la section de passage de gaz au niveau du second clapet (5, 10) d'isolement est supérieure à la section de passage de gaz au niveau du premier clapet (2, 3) anti-retour.

7. Dispositif selon l'une quelconque des revendications 1 à 6, **caractérisé en ce que** le troisième clapet (40) de fermeture comprend un obturateur sollicité par un organe de rappel vers un siège en position de fermeture, ledit obturateur du troisième clapet (40) étant sélectivement déplaçable hors du siège vers une position d'ouverture lorsqu'il est repoussé par contact, par exemple par un organe extérieur d'un système de connexion d'un élément de remplissage et/ou de soutirage.

8. Procédé de remplissage d'un réservoir de gaz sous pression pourvu d'un dispositif de remplissage et de distribution de gaz selon l'une quelconque des revendications précédentes, **caractérisé en ce qu'**il comporte une étape d'ouverture du second clapet (5, 10) d'isolement, une étape d'ouverture du premier clapet (2, 3) anti-retour par délivrance de gaz et, en fin de remplissage, une étape de fermeture automatique du premier clapet (2, 3) anti-retour par arrêt de la délivrance de gaz, puis une étape de fermeture du second clapet (5, 10) d'isolement.

## Claims

1. Gas filling and dispensing device comprising a body to be placed in the opening of a pressurized gas storage container (30), a gas withdrawal circuit (20) extending between an upstream first end intended to be connected to the inside of the container (30) and a downstream second end intended to be connected to a gas user, a filling duct (240) having an upstream first end intended to be connected to the inside of the container (30) and a downstream second end intended to be connected to a filling member, said filling duct (240) including at least one portion separate from the withdrawal circuit (20), the filling duct (240) including a first valve (2, 3), the filling duct (240) including an isolating second valve (5) placed in series with the first valve (2, 3), the isolating second valve (5) being placed downstream of the first valve (2, 3), **characterized in that** the isolating second valve (5, 10) includes an operating member (10) that can be actuated manually in order to open and close said second valve (5) and **in that** the first valve (2, 3) includes a movable obturator (2) urged downwardly by a return member (1) toward a seat (3) for automatically closing the filling duct (240), said first valve (2, 3) and the return member (1) being placed and designed to permit said first valve (2, 3) to open under the action of a stream of filling gas having a pressure above a predetermined threshold and **in that** the withdrawal circuit (20) and the filling duct (240) have common downstream ends, the filling duct (240) including a closure third valve (40) located downstream of the second valve (5), said closure third valve (40) being common to the downstream ends of the filling duct (240) and of the withdrawal circuit (20).

2. Device according to Claim 1, **characterized in that** the isolating second valve (5, 10) includes a seat (3) and a movable obturator (5) capable of cooperating with the seat (3) when the valve closes or opens in order to interrupt or allow, respectively, the flow of gas into the filling duct (240), the manually actuatable operating member (10) comprising a part (10) fastened to the movable obturator (5) and able to move relative to the body of the device, for example by screwing/unscrewing.

3. Device according to Claim 2, **characterized in that** the obturator (5) can move translationally and **in that** the filling duct (240) is connected to the isolating second valve (5) via a channel (241) and a chamber (60), said channel (241) being preferably approximately transverse to the translation direction of the movable obturator (5).

4. Device according to any one of Claims 1 to 3, **characterized in that** the withdrawal circuit (20) and the filling duct (240) have common or separate upstream ends and common or separate downstream ends.

5. Device according to any one of Claims 1 to 4, **characterized in that** the withdrawal circuit (20) includes at least one isolating valve (160) and a pressure regulator (50).

6. Device according to any one of Claims 1 to 5, **characterized in that** the gas flow cross-section of the isolating second valve (5, 10) is greater than the gas flow cross-section of the nonreturn first valve (2, 3).

7. Device according to any one of Claims 1 to 6, **characterized in that** the closure third valve (40) includes an obturator urged by a return member toward a seat in the closed position, said obturator of the third valve (40) being able to be selectively moved off the seat to an open position when it is pushed back by contact, for example, by an external member of a connection system of a filling and/or withdrawal element.

8. Method of filling a pressurized gas container provided with a gas filling and dispensing device according to any one of the preceding claims, **characterized in that** it includes a step of opening the isolating second valve (5, 10), a step of opening the nonreturn first valve (2, 3) by delivering gas and, at the end of filling, a step of automatically closing the nonreturn first valve (2, 3) by stopping the delivery of gas, followed by a step of closing the isolating second valve (5, 10).

## Patentansprüche

1. Vorrichtung zum Einfüllen und zur Ausgabe von Gas, die einen Körper enthält, der dazu bestimmt ist, in der Öffnung eines Speicherbehälters (30) von Druckgas angeordnet zu werden, wobei ein Gas-Entnahmekreis (20) sich wischen einem ersten vorderen Ende, das dazu bestimmt ist, mit dem Inneren des Behälters (30) verbunden zu werden, und einem zweiten hinteren Ende erstreckt, das dazu bestimmt ist, mit einem Nutzer des Gases verbunden zu werden, wobei eine Einfüllleitung (240) ein erstes vorderes Ende, das dazu bestimmt ist, mit dem Inneren des Behälters (30) verbunden zu werden, und ein zweites hinteres Ende hat, das dazu bestimmt ist, mit einem Einfüllorgan verbunden zu werden, wobei die Einfüllleitung (240) mindestens einen vom Entnahmekreis (20) unterschiedlichen Abschnitt enthält, wobei die Einfüllleitung (240) ein erstes Ventil (2, 3) enthält, wobei die Einfüllleitung (240) ein zweites Isolierventil (5) enthält, das in Reihe mit dem ersten Ventil (2, 3) angeordnet ist, wobei das zweite Isolierventil (5) hinter dem ersten Ventil (2, 3) angeordnet ist, **dadurch gekennzeichnet, dass** das zweite Isolierventil (5, 10) ein Bedienungsorgan (10) enthält, das manuell betätigbar ist, um das Öffnen und Schließen des zweiten Ventils (5) zu steuern, und dass das erste Ventil (2, 3) eine bewegliche Verschlussvorrichtung (2) enthält, die von einem Rückstellorgan (1) mit dem Ziel des automatischen Schließens der Einfüllleitung (240) nach hinten in Richtung eines Sitzes (3) beaufschlagt wird, wobei das erste Ventil (2, 3) und das Rückstellorgan (1) eingerichtet und bemessen sind, um das Öffnen des ersten Ventils (2, 3) unter der Wirkung eines Füllgases zu erlauben, das einen höheren Druck als ein bestimmter Schwellwert hat, und dass der Entnahmekreis (20) und die Einfüllleitung (240) gemeinsame hintere Enden haben, wobei die Einfüllleitung (240) ein drittes Schließventil (40) enthält, das sich hinter dem zweiten Ventil (5) befindet, wobei das dritte Schließventil (40) den hinteren Enden der Einfüllleitung (240) und des Entnahmekreises (20) gemeinsam ist.

2. Vorrichtung nach Anspruch 1, **dadurch gekennzeichnet, dass** das zweite Isolierventil (5, 10) einen Sitz (3) und eine bewegliche Verschlussvorrichtung (5) enthält, die beim Schließen oder Öffnen mit dem Sitz (3) zusammenwirken kann, um das Fließen eines Gases in der Einfüllleitung (240) zu unterbrechen bzw. zu erlauben, wobei das manuell betätigbare Bedienungsorgan (10) ein Bauteil (10) enthält, das fest mit der beweglichen Verschlussvorrichtung (5) verbunden und bezüglich des Körpers der Vorrichtung verschiebbar ist, zum Beispiel durch Zuschrauben/Aufschrauben.

3. Vorrichtung nach Anspruch 2, **dadurch gekennzeichnet, dass** die Verschlussvorrichtung (5) translationsbeweglich ist, und dass die Einfüllleitung (240) mit dem zweiten Isolierventil (5) über einen Kanal (241) und eine Kammer (60) verbunden ist, wobei der Kanal (241) vorzugsweise im Wesentlichen quer zur Translationsrichtung der beweglichen Verschlussvorrichtung (5) liegt.

4. Vorrichtung nach einem der Ansprüche 1 bis 3, **dadurch gekennzeichnet, dass** der Entnahmekreis (20) und die Einfüllleitung (240) gemeinsame oder getrennte vordere Enden und gemeinsame oder getrennte hintere Enden haben.

5. Vorrichtung nach einem der Ansprüche 1 bis 4, **dadurch gekennzeichnet, dass** der Entnahmekreis (20) mindestens ein Isolierventil (160) und einen Druckminderer (50) enthält.

6. Vorrichtung nach einem der Ansprüche 1 bis 5, **dadurch gekennzeichnet, dass** der Gasdurchlassquerschnitt im Bereich des zweiten Isolierventils (5, 10) größer als der Gasdurchlassquerschnitt im Bereich des ersten Rückschlagventils (2, 3) ist.

7. Vorrichtung nach einem der Ansprüche 1 bis 6, **dadurch gekennzeichnet, dass** das dritte Schließventil (40) eine Verschlussvorrichtung enthält, die von einem Rückstellorgan in die Schließstellung zu einem Sitz beaufschlagt wird, wobei die Verschlussvorrichtung des dritten Ventils (40) selektiv aus dem Sitz heraus in eine Öffnungsstellung verschiebbar ist, wenn sie durch Kontakt zurückgedrückt wird, zum Beispiel durch ein äußeres Organ eines Verbindungssystems eines Einfüll- und/oder Entnahmeelements.

8. Verfahren zum Füllen eines Druckgasbehälters, der mit einer Vorrichtung zum Einfüllen und zur Ausgabe von Gas nach einem der vorhergehenden Ansprüche versehen ist, **dadurch gekennzeichnet, dass** es einen Schritt des Öffnens des zweiten Isolierventils (5, 10), einen Schritt des Öffnens des ersten Rückschlagventils (2, 3) durch Freisetzen von Gas, und am Ende des Füllvorgangs einen Schritt des automatischen Schließens des ersten Rückschlagventils (2, 3) durch Anhalten der Gaslieferung und dann einen Schritt des Schließens des zweiten Isolierventils (5, 10) enthält.
